# EUROPEAN PATENT SPECIFICATION

(11) **EP 2 952 776 B1**
(45) Date of publication and mention of the grant of the patent: **23.10.2019**
(21) Application number: 15165285.6
(22) Date of filing: 27.04.2015
(51) Int. Cl.: F16F 15/00, F16F 15/139

(54) **DUAL MASS DAMPER WITH TORQUE LIMITER FUNCTION**
ZWEIMASSENSCHWUNGRAD MIT DREHMOMENTBEGRENZUNGSVORRICHTUNG
VOLANT D'INERTIE BI-MASSE AVEC DISPOSITIF DE LIMITEUR DE COUPLE

(30) Priority: 30.04.2014 KR 20140052192
(43) Date of publication of application: 09.12.2015
(73) Proprietor: Valeo Pyeong Hwa Co., Ltd., Daegu 704-190 (KR); Valeo Embrayages, 80009 Amiens Cedex 2 (FR)
(72) Inventor: DO,M. Taejun, Cheongdo-gun 714-801 (KR); KIM, Jongryul, Daegu 704-190 (KR)
(74) Representative: Cardon, Nicolas

(56) References cited:
- EP-A1- 2 602 508
- EP-A2- 2 233 779
- DE-A1- 3 704 643
- DE-C1- 3 545 857
- FR-A1- 2 699 247
- FR-A1- 2 825 129
- US-A- 5 935 008

## Description

### [TECHNICAL FIELD]

The present invention relates to a dual mass damper, and more particularly to a dual mass damper having a torque limiter function, to which a disc type torque limiter is applied and in which an installation portion of a friction material of the torque limiter is set in a radially outermost location from the centre of rotation of the dual mass damper, thereby improving a torque transmission capacity according to an increase in effective radius of the friction material and improving a durability performance of the friction material.

### [BACKGROUND ART]

In general, a dual mass damper is installed between an engine and a transmission of a vehicle and uses inertial force thereof to damp an abnormal shock or vibration generated in a process of transmitting power.

For example, Korean Patent Publication No. 10-2012-0063920 discloses a torsion damper for a hybrid vehicle, which includes an inertial plate coupled to an output side of an engine, a cover plate coupled to the inertial plate to form a space for accommodating oil, a first damper plate coupled to the inertial plate to integrally rotate with the inertial plate, a second damper plate integrally coupled to the first damper plate, a plurality of compression coil springs circumferentially disposed on the first and second damper plates and absorbing a vibration and a shock in a direction of rotation of the torsion damper, a driven plate disposed between the first and second damper plates and elastically supported by the compression coil springs to receive reaction force in the direction of rotation, a connecting plate connecting the compression coil springs in series to each other and disposed on an outer circumference of the driven plate, a torque limiter connected to the driven plate, a spline hub connected to the torque limiter to transmit driving force, transmitted to the torque limiter, to a transmission.

The torque limiter includes a core plate coupled to the driven plate, friction materials coupled to both side surfaces of the core plate, a support plate coupled to the spline hub to tightly contact a surface of the friction materials, a pressure plate coupled to the spline hub to axially move and tightly contact another surface of the friction materials, and a disc spring elastically supported between the spline hub and the pressure plate to press the pressure plate towards the support plate, to cut off transmission of excessive torque from the engine to the transmission, thereby protecting the transmission.

However, such torsion dampers in the prior art provide a torque limiter configuration in which friction materials capable of contacting a pressure plate are disposed in a radially inner location adjacent to the centre of a spline hub. Thus, a transmittable torque capacity is small, so that the torsion dampers cannot be applied to a vehicle having high transmission torque.

That is, a transmittable torque capacity (T) of a frictional torque limiter is determined according to the number of sheets of friction material (n), a coefficient of friction of the friction material (µ), a vertical load (F) applied to the friction material, and an effective radius (Rm) of the friction material (T = n × µ × F × Rm). The friction materials of the torque limiter applied to the torsion damper disclosed in Korean Patent Publication No. 10-2012-0063920 have a small effective radius set in a location adjacent to the centre of the spline hub. Thus, it is difficult to apply the torsion damper to a vehicle that transmits relatively large torques.

Accordingly, the number of sheets of friction material must be increased, or friction materials having a relatively great coefficient of friction must be adopted, in order to apply a dual mass damper having a structure as described above to a vehicle having a large torque transmission capacity. For example, when the number of sheets of friction material to be installed is increased, the axial volume of the torque limiter inevitably has to be set to a large value, which is disadvantageous in terms of the package.

### [DOCUMENT IN PRIOR ART]

### [PATENT DOCUMENT]

[PATENT DOCUMENT 0001] Korean Patent Publication No. 10-2012-0063920 disclosing a torsion damper for a hybrid vehicle. Furthermore, document FR 2,699,247 A1 discloses a dual mass damper with torque limiter function according to the preamble of claim 1.

### [DISCLOSURE OF THE INVENTION]

### [Problem(s) to be Solved]

To address the above issues, an object of the present invention is to provide a dual mass damper having a torque limiter function, in which the dual mass damper is provided with a torque limiter function, and the location of a friction material is set to a radially outermost location from the centre of rotation of the dual mass damper, thereby increasing the torque transmission capacity and improving the durability performance of the friction material.

Another object of the present invention is to provide a dual mass damper having a torque limiter function, in which a spring guide is applied to an installation portion of a drive plate contacting a coil spring in order to absorb vibration and shock generated in the direction of rotation of the dual mass damper, and grease is applied to a contact portion between the coil spring and the drive plate, thereby improving the durability performance of the damper.

### [Means for Solving the Problem(s)]

To achieve the above objects, the present invention includes: a first mass coupled to an output side of an engine and circumferentially forming a first accommodating space therein; a cover plate coupled to the first mass to finish the first accommodating space; a guide casing installed in the first accommodating space and circumferentially forming a second accommodating space therein; a coil spring circumferentially disposed in the second accommodating space; a drive plate disposed within the coil spring in the second accommodating space; a second mass connected to the drive plate and including a spline hub to be coupled to an input side of a transmission; and torque limiters installed between the first mass and the guide casing and between the cover plate and the guide casing, respectively, wherein the torque limiters are supported by the first mass and the cover plate, respectively, in a radially outer location from the centre of the spline hub, so that the torque limiters can contact both side parts of the guide casing, respectively, in a direction crossing an axial direction of a damper.

The torque limiters include: disc springs installed such that rear surfaces thereof are supported by the first mass and the cover plate, respectively; support plates installed such that rear surfaces thereof are pressed by the disc springs; and friction materials coupled to the support plates and installed such that the friction materials can contact the side parts of the guide casing, respectively.

One of the disc springs is installed such that an outer diameter part of the disc spring is supported by a first protrusion protruding from an inner surface of the first mass to a second casing of the guide casing, and the other of the disc springs is installed such that an outer diameter part of the disc spring is supported by a second protrusion part protruding from an inner surface of the cover plate to a first casing of the guide casing.

One of the support plates is installed such that an inner diameter part of the support plate is supported by a third protrusion protruding from a first casing of the guide casing to the cover plate, and the other of the support plates is installed such that an inner diameter part of the support plate is supported by a fourth protrusion part protruding from a second casing of the guide casing to the first mass.

An example not according to the invention includes: a first mass coupled to an output side of an engine and circumferentially forming a first accommodating space therein; a cover plate coupled to the first mass to finish the first accommodating space; a guide casing installed in the first accommodating space and circumferentially forming a second accommodating space therein; a coil spring circumferentially disposed in the second accommodating space; a drive plate disposed within the coil spring in the second accommodating space; a second mass connected to the drive plate and including a spline hub to be coupled to an input side of a transmission; and torque limiters installed on flange connection portions of the guide casing between the first mass and the cover plate,
wherein the torque limiters are fixed to the flange connection portions of the guide casing in a radially outer location from the centre of the spline hub, so that the torque limiters can contact the first mass and the cover plate, respectively, in a direction crossing an axial direction of a damper.

The torque limiters include: disc springs installed, respectively, on the flange connection portions of the guide casing between the first mass and the cover plate to provide elastic force in the axial direction of the damper; a core plate fixed to flange connection portions between a first casing and a second casing of the guide casing; friction materials coupled to both side surfaces of the core plate, respectively, and installed towards the disc springs; and support plates disposed such that a surface thereof can contact the friction material, and the rear surfaces thereof are elastically supported by the disc springs.

A further example not according to the invention includes: a first mass coupled to an output side of an engine and circumferentially forming a first accommodating space therein; a cover plate coupled to the first mass to finish the first accommodating space; a guide casing installed in the first accommodating space and circumferentially forming a second accommodating space therein; a coil spring circumferentially disposed in the second accommodating space; a drive plate disposed within the coil spring in the second accommodating space; a second mass connected to the drive plate and including a spline hub to be coupled to an input side of a transmission; and a torque limiter installed between the first mass and the guide casing, wherein the torque limiter is fixed to the guide casing in a radially outer location from the centre of the spline hub, so that the torque limiter can contact the first mass in a direction parallel to an axial direction of a dual mass damper.

The torque limiter in the present embodiment includes: a wave spring installed to the radial outside of the damper at a bent portion of a second casing of the guide casing towards the front end thereof; a drum, a rear surface of which is elastically supported by the wave spring and which is pressed to the radial outside of the damper; and a friction material installed on an outer surface of the drum such that the friction material can contact an inner surface of a bent portion of the first mass adjacent to the portion of a flange of the first mass.

The wave spring is supported by a seat structure fixed to a bent portion of a second casing of the guide casing adjacent to a portion of a flange disposed on the radial outside thereof, and the drum is installed on an inner surface of the first mass such that an inner diameter part of the drum is supported by a bracket protruding toward the guide casing.

### [EFFECTS OF THE INVENTION]

According to the present invention, a disc or drum type torque limiter is applied to a dual mass damper installed between an engine and a transmission to absorb irregularly varying inertial force transmitted from the engine in a direction of rotation thereof, and an installation portion of a friction material of the torque limiter in the dual mass damper is set in a radially outermost location from the centre of rotation of the dual mass damper, thereby significantly increasing a torque transmission capacity according to an increase in effective radius of the friction material, thus providing a dual mass damper appropriate for a high power engine.

In addition, according to an increase in effective radius of the friction material of the torque limiter applied to the dual mass damper, a transmittable torque capacity can be increased, and a durability performance of the friction material can be improved. Specifically, since an installation radius of a spring installed to elastically support the friction material of the torque limiter in the dual mass damper can be increased, a limitation in achieving low stiffness of the spring can be overcome, and vibration and shock damping characteristics achieved using the dual mass damper can be significantly improved.

In addition, the dual mass damper may employ a spring guide as a separate block type part coupled in a fitting manner to an installation portion of a drive plate providing compressive force to a coil spring to absorb a vibration and a shock generated in a direction of rotation of the dual mass damper, and the contact portion between the spring guide and the drive plate, and the inside of a guide casing having a partially open structure accommodating the coil spring, may be individually filled with a required amount of lubricating grease for reducing friction by applying the lubricating grease thereto, thus significantly improving the durability performance of the spring that is repeatedly and continually compressed and extended during operation of the damper.

### [BRIEF DESCRIPTION OF THE DRAWINGS]

FIG. 1 is a cross-sectional view illustrating a dual mass damper having a torque limiter function according to a first embodiment of the present invention.
FIG. 2 is a cross-sectional view illustrating a dual mass damper having a torque limiter function according to a second embodiment not according to the present invention.
FIG. 3 is a cross-sectional view illustrating a dual mass damper having a torque limiter function according to a third embodiment not according to the present invention.

### [MODE FOR CARRYING OUT THE INVENTION]

Hereinafter, embodiments of the present invention will now be described in detail with reference to the accompanying exemplary drawings.

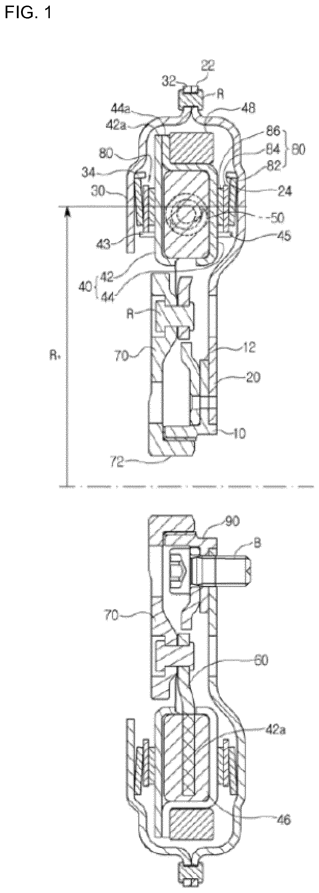

FIG. 1 is a cross-sectional view illustrating a dual mass damper having a torque limiter function according to a first embodiment of the present invention.

Referring to FIG. 1, a dual mass damper according to the first embodiment of the present invention includes a main hub (10), a first mass (20), a cover plate (30), a guide casing (40), a coil spring (50), a drive plate (60), a second mass (70), torque limiters (80), and a bearing (90).

The hub (10) as a main hub is coaxially disposed with a crank shaft as an output side of an engine and is constituted by a hollow-shaped member directly connected to the crank shaft. The main hub (10) is integrally formed with a flange (12) extending in the outward radial direction thereof such that the main hub (10) and the first mass (20) are assembled by tightening a screw. Accordingly, the main hub (10) transfers driving force generated from the engine to the first mass (20), so that the main hub (10) can integrally rotate with the first mass (20).

The first mass (20) is rotatably coupled to the output side of the engine through the main hub (10) and is a type of ring-shaped casing element manufactured to have a side that opens towards an input side of a transmission. The first mass (20) forms a first accommodating space in the whole of an inner circumferential part thereof to install the guide casing (40) and the torque limiters (80). More particularly, the invention is configured in such a way that the guide casing (40) and the torque limiter (80) can respectively be disposed aligned in positions in the radial direction that are the same distance away from the centre of rotation of the main hub (10) in the first mass (20).

The cover plate (30), disposed on an axis of the first mass (20) in a location spaced apart from the centre of rotation of the dual mass damper, is coupled to the first mass (20) to rotate together with the first mass (20) and is a type of ring-shaped casing element manufactured to have a side that opens toward the output side of the engine. That is, the cover plate (30) is formed to finish the first accommodating space, together with the first mass (20). In this case, it is preferred that a radial size of the cover plate (30) is set to extend up to a proper size within an area needed to install the torque limiters (80). The first mass (20) and the cover plate (30) may be coupled to each other by assembling the first mass (20) and the cover plate (30) such that portions of flanges (22 and 32) disposed on the outermost side of the first mass (20) and the cover plate (30) in the radial direction thereof contact each other, and locking the first mass (20) and the cover plate (30) with a rivet (R).

The guide casing (40) is a ring-shaped member installed in the first accommodating space formed by the first mass (20) and the cover plate (30) and circumferentially forms a second accommodating space therein, and the second accommodating space is separated from the first accommodating space. For example, the guide casing (40) forming the second accommodating space therein is constituted by a first casing (42) and a second casing (44) as two members coupled in a butt joint manner and is manufactured to a size so that a block type spring guide (46) circumferentially contacting the coil spring (50) can be installed within the second accommodating space in the guide casing (40). In this case, the first casing (42) and the second casing (44) may be coupled to each other by assembling the first casing (41) and the second casing (44) such that portions of flanges (42a and 44a) located on the outsides of the first casing (42) and the second casing (44) in the radial direction thereof contact each other, and welding the first casing (42) and the second casing (44) to each other. The spring guide (46) includes a cut recess (46a) such that the spring guide (46) is fitted on an outer portion of the drive plate (60) in the radial direction thereof, and the cut recess (46a) is formed by partially cutting a portion of a material.

That is, the guide casing (40) is formed to a size, so that the coil spring (50), a portion of the drive plate (60), and the spring guide (46) can be installed in the second accommodating space, and particularly, is formed in a partially open structure having an open portion, so that a protrusion portion of the drive plate (60) at the radial outside thereof can be inserted in a radially inner portion of the guide casing (40). Specifically, the second accommodating space disposed in the guide casing (40) may be used as a storage space filled with a proper amount of lubricating grease, so as to significantly reduce friction generated in both a contact area between the drive plate (60) and the cut recess (46a) of the spring guide (46) and a contact area between the spring guide (46) and a free end portion of the coil spring (50) in the guide casing (40). A ring-shaped auxiliary mass (48) is installed on the portions of the flanges (42a and 44a) of the guide casing (40). Accordingly, the auxiliary mass (48) has a function of supplementing inertial force generated by the first mass (20) and the second mass (70).

The coil spring (50) is circumferentially disposed in the second accommodating space of the guide casing (40) and is radially spaced apart from the guide casing (40) to absorb a vibration and a shock generated in a direction of rotation of the dual mass damper. To this end, both free end portions of the coil spring (50) can contact the spring guide (46).

The drive plate (60) is constituted by a ring-shaped member, which is disposed within a space of the coil spring (50) in the second accommodating space of the guide casing (40) and elastically supported by elastic force of the coil spring (50) to receive reaction force in the direction of rotation of the dual mass damper. In this case, a free end portion of the drive plate (60) on the radial outside thereof is fitted in the cut recess (46a) of the spring guide (46), so that the drive plate (60) can indirectly receive the elastic force of the coil spring (50) through the spring guide (46).

The second mass (70) is a ring-shaped member connected to the drive plate (60), and the centre thereof is integrally formed with a spline hub (72) that is coaxially spaced apart from the main hub (10) and that is coupled to the input side of the transmission to set a path for transmitting power. In this case, the second mass (70) and the drive plate (60) may be coupled to each other by locking portions of the second mass (70) and the drive plate (60) with a rivet (R).

The torque limiters (80) are constituted by a pair of disc type friction means, which are disposed in both a space between the first mass (20) and the guide casing (40) and a space between the cover plate (30) and the guide casing (40), so that the disc type friction means can contact both side parts of the guide casing (40), respectively, in a direction crossing an axial direction of the dual mass damper, to cut off transmission of an overload input from the output side of the engine, thereby protecting the transmission.

In this case, the torque limiters (80) are radially spaced outwards from the centre of the main hub (10) or the spline hub (72) and are disposed in locations facing the side parts of the guide casing (40), in particular, such that the torque limiters (80) can individually contact the first casing (42) and the second casing (44) in the direction crossing the axial direction of the dual mass damper.

To this end, the torque limiters (80) include: ring-shaped disc springs (82) installed such that rear surfaces thereof are supported by the first mass (20) and the cover plate (30), respectively, to provide elastic force in the axial direction of the dual mass damper; ring-shaped support plates (84) installed such that rear surfaces thereof are pressed by the disc springs (82); and ring-shaped friction materials (86) coupled to the support plates (84) and installed such that the friction materials (86) can contact the side parts of the guide casing (40) in the direction crossing the axial direction of the dual mass damper, respectively.

One of the disc springs (82) constituting the torque limiters (80) is installed to be supported by an inner surface of the first mass (20), and the other is installed to be supported by an inner surface of the cover plate (30). One of the friction materials (86) constituting the torque limiters (80) is installed such that the friction material can contact an outer surface of the first casing (42) of the guide casing (40), and the other is installed such that the friction material can contact an outer surface of the second casing (44) of the guide casing (40).

One of the disc springs (82) constituting the torque limiters (80) is installed such that an outer diameter part of the disc spring is supported by a first protrusion part (24) protruding from the inner surface of the first mass (20) to the second casing (44) of the guide casing (40). The other of the disc springs (82) constituting the torque limiters (80) is installed such that an outer diameter part of the disc spring is supported by a second protrusion part (34) protruding from the inner surface of the cover plate (30) to the first casing (42) of the guide casing (40).

One of the support plates (84) constituting the torque limiters (80) is installed such that an inner diameter part of the support plate is supported by a third protrusion part (43) protruding from the outer surface of the first casing (42) of the guide casing (40) to the first mass (20). The other of the support plates (84) constituting the torque limiters (80) is installed such that an inner diameter part of the support plate is supported by a fourth protrusion part (45) protruding from the outer surface of the second casing (44) of the guide casing (40) to the cover plate (30).

Thus, according to the first embodiment of the present invention, since an effective radius (Rm) of the friction materials (86) of the torque limiters (80) radially extends from the centre of the main hub (10) or the spline hub (72) to an outer edge portion of the dual mass damper, a transmittable torque capacity can be improved without increasing an axial size of the dual mass damper, compared with the prior art.

The bearing (90) is installed between an inner circumferential surface of the main hub (10) and an outer circumferential surface of the spline hub (72) of the second mass (70) to allow relative rotations therebetween and may be replaced with a needle bearing or a bushing according to a spatial clearance of an installation area.

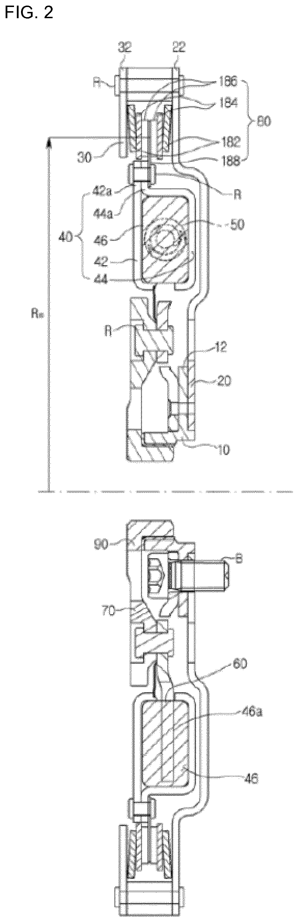

FIG. 2 is a cross-sectional view illustrating a dual mass damper having a torque limiter function according to a second embodiment not according to the present invention.

Referring to FIG. 2, a dual mass damper according to the second embodiment includes a main hub (10), a first mass (20), a cover plate (30), a guide casing (40), a coil spring (50), a drive plate (60), a second mass (70), torque limiters (80), and a bearing (90), as in the first embodiment.

Unlike in the first embodiment, the torque limiters (80) according to the second embodiment are constituted by a pair of disc type friction means, which are fixed to coupling portions of flanges (42a and 44a) disposed on the radial outside of a first casing (42) and a second casing (44) constituting the guide casing (40) between the first casing (42) and the second casing (44) and which can contact the first mass (20) and the cover plate (30), respectively, in a direction crossing an axial direction of the dual mass damper, to cut off transmission of an overload input from an output side of an engine, thereby protecting a transmission.

That is, the torque limiters (80) include: disc springs (182) constituted by a pair of ring-shaped members individually installed to provide elastic force in the axial direction of the dual mass damper to portions of inner surfaces of the first mass (20) and the cover plate (30) adjacent to portions of flanges (22 and 32), respectively, of the first mass (20) and the cover plate (30); a core plate (188) constituted by a single ring-shaped member which is fixed through a rivet (R) to the coupling portions of the flanges (42a and 44a) disposed on the radial outside of the first casing (42) and the second casing (44) as a coupling side thereof and which extends in the radial direction of the dual mass damper; friction materials (186) constituted by a pair of ring-shaped members which are coupled to both side surfaces of the core plate (188), respectively, and which are installed toward the disc springs (182); and support plates (184) constituted by a pair of ring-shaped members which are installed such that a surface thereof can contact the friction material (186), and rear surfaces thereof are elastically supported by the disc springs (182).

The friction materials (186) of the torque limiters (80) can contact both the support plate (184) disposed in the direction crossing the axial direction of the dual mass damper and installed toward an inner circumferential surface of the flange (22) of the first mass (20) and the support plate (184) disposed in the direction crossing the axial direction of the dual mass damper and installed toward an inner circumferential surface of the flange (32) of the cover plate (30).

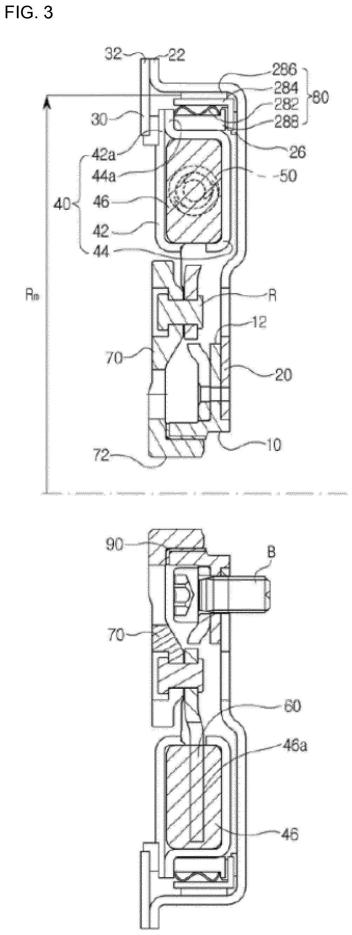

FIG. 3 is a cross-sectional view illustrating a dual mass damper having a torque limiter function according to a third embodiment not according to the present invention.

Referring to FIG. 3, a dual mass damper according to the third embodiment includes a main hub (10), a first mass (20), a cover plate (30), a guide casing (40), a coil spring (50), a drive plate (60), a second mass (70), a torque limiter (80), and a bearing (90), as in the first and second embodiments.

Unlike in the first and second embodiments, the torque limiter (80) according to the third embodiment is constituted by a drum type friction means, which can contact an inner surface of the first mass (20) in a direction parallel to an axial direction of the dual mass damper in a space between the first mass (20) and a first casing (42) of the guide casing (40), to cut off transmission of an overload input from an output side of an engine, thereby protecting a transmission.

In this case, the torque limiter (80) is radially spaced outwards from the centre of the main hub (10) or a spline hub (72) and is disposed in a location facing the inner surface of the first mass (20), in particular, such that the torque limiter (80) can contact a bent portion of the first mass (20) adjacent to a portion of a flange (22) in the direction parallel to the axial direction of the dual mass damper.

To this end, the torque limiter (80) includes: a wave spring (282) installed to provide elastic force to the radial outside of the dual mass damper at a bent portion of a second casing (44) of the guide casing (40) on a front end side thereof; a drum (284), a rear surface of which is elastically supported by the wave spring (282) and which is pressed to the radial outside of the dual mass damper; and a friction material (286) installed on an outer surface of the drum (284) such that the friction material can contact an inner surface of the bent portion of the first mass (20) adjacent to the portion of the flange (22) in the direction parallel to the axial direction of the dual mass damper.

Specifically, the wave spring (282) is securely supported by a seat structure (288) fixed to an outer surface of a bent portion of the second casing (44) of the guide casing (40) adjacent to a portion of a flange (44a) disposed on the radial outside thereof, and an end part of the drum (284) is independently coupled to the inner surface of the first mass (20) such that an inner diameter part of the drum is supported by a bracket (26) protruding toward the guide casing (40).

Thus, according to the embodiments, since the friction material (86, 186, or 286) constituting the torque limiter (80) of the dual mass damper having the torque limiter function may be installed in the radially outermost location from the centre of rotation of the dual mass damper, the transmittable torque capacity can be set to a large value by increasing the effective radius (Rm) of the friction material (86, 186, or 286), thereby providing a dual mass damper appropriate for a high power engine without increasing an axial package size of the dual mass damper.

In addition, according to the embodiments, the transmittable torque capacity is improved by increasing the effective radius (Rm) of the friction material (86, 186, or 286) of the torque limiter (80) of the dual mass damper, so as to improve a durability performance of the friction material (86, 186, or 286). Specifically, since an installation radius of the disc spring (82 or 182) or the wave spring (282) for independently and elastically supporting the friction material (86, 186, or 286) in the dual mass damper may be significantly increased, a limitation in achieving low stiffness of the spring can be overcome, and vibration and shock damping characteristics achieved using the dual mass damper can be improved.

In addition, the dual mass dampers according to the embodiments, may employ the spring guide (46) as a separate block type part coupled in a fitting manner to an installation portion of the drive plate (60) providing compressive force to the coil spring (50) to absorb vibration and shock generated in the direction of rotation of the dual mass dampers, and the contact portion between the spring guide (46) and the drive plate (60), and the inside of the guide casing (40); having a partially open structure accommodating the coil spring (50) may be individually filled with a required amount of lubricating grease for reducing friction by applying the lubricating grease thereto, thus significantly improving the durability performance of the spring that is repeatedly and continually compressed and extended during operation of the dampers.

While a preferred embodiment of the present invention has been described with reference to the accompanying drawings, the present invention, the scope of which is defined by the appended claims, is not limited to the preferred embodiment, and it will be understood by a person skilled in the art to which the present invention belongs that various modifications and changes may be made.

**[DESCRIPTION OF REFERENCE NUMERALS]**

| | | | |
|---|---|---|---|
| 10: | MAIN HUB | 20: | FIRST MASS |
| 30: | COVER PLATE | 40: | GUIDE CASING |
| 50: | COIL SPRING | 60: | DRIVE PLATE |
| 70: | SECOND MASS | 80: | TORQUE LIMITER |
| 82 and 182: | DISC SPRING | 282: | WAVE SPRING |
| 84 and 184: | SUPPORT PLATE | 284: | DRUM |
| 86, 186, and 286: | FRICTION MATERIAL | | |
| 90: | BEARING | | |

## Claims

1. Dual mass damper having a torque limiter function, comprising:
a first mass (20) coupled to an output side of an engine and circumferentially forming a first accommodating space therein;
a cover plate (30) coupled to the first mass to finish the first accommodating space;
a guide casing (40) installed in the first accommodating space and circumferentially forming a second accommodating space therein;
a coil spring (50) circumferentially disposed in the second accommodating space;
a drive plate (60) disposed within the coil spring in the second accommodating space;
a second mass (70) connected to the drive plate and including a spline hub to be coupled to an input side of a transmission; and
torque limiters (80) installed between the first mass and the guide casing and between the cover plate and the guide casing, respectively,
**characterized in that**, the torque limiters are supported by the first mass and the cover plate, respectively, in a radially outer location from the centre of the spline hub, so that the torque limiters can contact both side parts of the guide casing, respectively, in a direction crossing an axial direction of the dual mass damper.

2. Dual mass damper according to Claim 1, wherein the torque limiters include: disc springs (82) installed such that rear surfaces thereof are supported by the first mass and the cover plate, respectively; support plates (84) installed such that rear surfaces thereof are pressed by the disc springs; and friction materials (86) coupled to the support plates and installed such that the friction materials can contact the side parts of the guide casing, respectively.

3. Dual mass damper according to Claim 2, wherein one of the disc springs is installed such that an outer diameter part of the disc spring is supported by a first protrusion (24) protruding from an inner surface of the first mass (20) to a second casing (44) of the guide casing, and the other of the disc springs is installed such that an outer diameter part of the disc spring is supported by a second protrusion (34) part protruding from an inner surface of the cover plate (30) to a first casing (42) of the guide casing.

4. Dual mass damper according to Claim 2, wherein one of the support plates is installed such that an inner diameter part of the support plate is supported by a third protrusion (43) protruding from a first casing (42) of the guide casing to the cover plate (30), and the other of the support plates is installed such that an inner diameter part of the support plate is supported by a fourth protrusion part (45) protruding from a second casing (44) of the guide casing to the first mass.

## Patentansprüche

1. Zweimassenschwungrad mit einer Drehmomentbegrenzungsfunktion, umfassend:
eine erste Masse (20), die an eine Ausgangsseite eines Motors gekoppelt ist und umlaufend einen ersten Aufnahmeraum darin ausbildet;
eine Abdeckplatte (30), die an die erste Masse gekoppelt ist, um den ersten Aufnahmeraum abzuschließen;
ein Führungsgehäuse (40), das in dem ersten Aufnahmeraum installiert ist und umlaufend einen zweiten Aufnahmeraum darin ausbildet;
eine Spiralfeder (50), die umlaufend in dem zweiten Aufnahmeraum angeordnet ist;
eine Mitnehmerscheibe (60), die innerhalb der Spiralfeder in dem zweiten Aufnahmeraum angeordnet ist;
eine zweite Masse (70), die mit der Mitnehmerscheibe verbunden ist und eine Keilnabe beinhaltet, die an eine Eingangsseite eines Getriebes zu koppeln ist; und
Drehmomentbegrenzer (80), installiert zwischen der ersten Masse und dem Führungsgehäuse bzw. zwischen der Abdeckplatte und dem Führungsgehäuse,
**dadurch gekennzeichnet, dass**
die Drehmomentbegrenzer von der ersten Masse bzw. der Abdeckplatte an einer von der Mitte der Keilnabe radial äußeren Stelle abgestützt werden, sodass die Drehmomentbegrenzer beide Seitenteile des Führungsgehäuses jeweils in einer Richtung kontaktieren können, die eine axiale Richtung des Zweimassenschwungrads quert.

2. Zweimassenschwungrad nach Anspruch 1, wobei die Drehmomentbegrenzer Folgendes beinhalten: Tellerfedern (82), die so installiert sind, dass hintere Oberflächen davon von der ersten Masse bzw. der Abdeckplatte abgestützt werden; Stützplatten (84), die so installiert sind, dass hintere Oberflächen davon von den Tellerfedern gedrückt werden; und Reibungsmaterialien (86), die an die Stützplatten gekoppelt und so installiert sind, dass die Reibungsmaterialien jeweils die Seitenteile des Führungsgehäuses kontaktieren können.

3. Zweimassenschwungrad nach Anspruch 2, wobei eine der Tellerfedern so installiert ist, dass ein Außendurchmesserteil der Tellerfeder von einem ersten Vorsprung (24) abgestützt wird, der von einer inneren Oberfläche der ersten Masse (20) zu einem zweiten Gehäuse (44) des Führungsgehäuses vorsteht, und die andere der Tellerfedern so installiert ist, dass ein Außendurchmesserteil der Tellerfeder von einem zweiten Vorsprungsteil (34) getragen wird, das von einer inneren Oberfläche der Abdeckplatte (30) zu einem ersten Gehäuse (42) des Führungsgehäuses vorsteht.

4. Zweimassenschwungrad nach Anspruch 2, wobei eine der Stützplatten so installiert ist, dass ein Innendurchmesserteil der Stützplatte von einem dritten Vorsprung (43) abgestützt wird, der von einem ersten Gehäuse (42) des Führungsgehäuses zu der Abdeckplatte (30) vorsteht, und die andere der Stützplatten so installiert ist, dass ein Innendurchmesserteil der Stützplatte von einem vierten Vorsprungsteil (45) abgestützt wird, das von einem zweiten Gehäuse (44) des Führungsgehäuses zu der ersten Masse vorsteht. Führungsgehäuses vorsteht.

## Revendications

1. Amortisseur à deux masses ayant une fonction de limitation de couple, comprenant:
une première masse (20) couplée à un côté sortie d'un moteur et formant de manière circonférentielle un premier espace de réception dans celui-ci ;
un couvercle (30) couplé à la première masse pour finir le premier espace de logement ;
un boîtier de guidage (40) installé dans le premier espace de logement et formant de manière circonférentielle un second espace de logement dans celui-ci;
un ressort hélicoïdal (50) disposé de manière circonférentielle dans le second espace de logement ;
une plaque d'entraînement (60) disposée à l'intérieur du ressort hélicoïdal dans le deuxième espace de logement ;
une deuxième masse (70) connectée au couvercle et comprenant un moyeu cannelé destiné à être couplé à un côté entrée d'une transmission ; et
des limiteurs de couple (80) installés entre la première masse et le boîtier de guidage et entre le couvercle et le boîtier de guidage, respectivement,
charactérisé en ce que les limiteurs de couple sont respectivement supportés par la première masse et le couvercle dans un emplacement radialement extérieur à partir du centre du moyeu cannelé, de sorte que les limiteurs de couple puissent être en contact avec les deux parties latérales du boîtier de guidage, respectivement, dans un sens traversant une direction axiale de l'amortisseur à deux masses.

2. Amortisseur à deux masses selon la revendication 1, dans lequel les limiteurs de couple comprennent: des ressorts à disque (82) installés de manière que leurs surfaces arrière soient supportées par la première masse et le couvercle, respectivement; des plaques de support (84) installées de manière à ce que leurs surfaces arrière soient comprimées par les ressorts à disque et des matériaux de friction (86) couplés aux plaques de support et installées de manière à ce que les matériaux de friction puissent toucher les parties latérales du boîtier de guidage, respectivement.

3. Amortisseur à deux masses selon la revendication 2, dans lequel l'un des ressorts à disque est installé de telle sorte qu'une partie de diamètre extérieur du ressort à disque est supportée par une première saillie (24) faisant saillie de la surface intérieure de la première masse (20) à un second boîtier (44) du boîtier de guidage et l'autre des ressorts à disque sont installés de telle sorte qu'une partie de diamètre extérieur du ressort à disque soit supportée par une seconde partie saillante (34) faisant saillie de la surface intérieure du boîtier de guidage (30) à un premier boîtier (42) du boîtier de guidage.

4. Amortisseur à deux masses selon la revendication 2, dans lequel l'une des plaques de support est installée de telle sorte qu'une partie de diamètre interne de la plaque de support est supportée par une troisième saillie (43) faisant saillie depuis un premier boîtier (42) du boîtier de guidage jusqu'au couvercle, la plaque (30) et l'autre des plaques de support sont installées de telle sorte qu'une partie de diamètre interne de la plaque de support est supportée par une quatrième partie en saillie (45) faisant saillie depuis un second boîtier (44) du boîtier de guidage sur la première masse.
